(19) Europäisches Patentamt
European Patent Office
Office européen des brevets

(11) **EP 4 618 446 A1**

(12) **EUROPÄISCHE PATENTANMELDUNG**

(43) Veröffentlichungstag:
**17.09.2025 Patentblatt 2025/38**

(21) Anmeldenummer: **24221144.9**

(22) Anmeldetag: **18.12.2024**

(51) Internationale Patentklassifikation (IPC):
***H04B 10/118*** (2013.01) ***H04J 3/06*** (2006.01)

(52) Gemeinsame Patentklassifikation (CPC):
**H04B 10/118; H04J 3/0682**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **13.03.2024 DE 102024107168**

(71) Anmelder: **Deutsches Zentrum für Luft- und Raumfahrt e.V.**
**53227 Bonn (DE)**

(72) Erfinder:
• **Surof, Janis**
**82234 Weßling (DE)**
• **Poliak, Juraj**
**82234 Weßling (DE)**

(74) Vertreter: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **VERFAHREN ZUR BIDIREKTIONALEN ÜBERTRAGUNG VON OPTISCHEN TRÄGERSIGNALEN VON EINER ERSTEN SENDE-/EMPFANGS-EINHEIT ZU EINER ZWEITEN SENDE-/EMPFANGSEINHEIT FÜR DEN ZEITTRANSFER UND DAS RANGING**

(57) Das Verfahren zur bidirektionalen Übertragung von optischen Trägersignalen beinhaltet die Übertragung eines Datenstroms, der Nutzdatenframes und Zeitdatenframes aufweist, wobei auf mehrere sequentielle Nutzdatenframes ein Zeitdatenframe folgt, auf den wiederum mehrere sequentielle Nutzdatenframes folgen. Jeder Zeitdatenframe weist einen Header mit einer jeweils empfängerseitig bekannten, mehrere Chips umfassenden PRN Sequenz und mit einem Zeitstempel auf, der den jeweiligen senderseitigen Absendezeitpunkt des Zeitdatenframes und den Zeitunterschied zwischen dem empfängerseitigen Absendezeitpunkt und dem senderseitigen Empfangszeitpunkt des letzten zuvor senderseitig empfangenen Zeitdatenframe aufweist. Die PRN Sequenz liegt im Empfänger als digitale Binär-PRN Sequenz vor. Empfängerseitig wird der Datenstrom in einen Bitstrom mit Binärdaten gewandelt und der Bitstrom mit der digitalen Binär-PRN Sequenz korreliert, um die PRN Sequenz des Headers des jeweils nächsten Zeitdatenframes innerhalb des empfangenen Datenstroms erkennen zu können. Empfängerseitig wird schließlich der Empfangszeitpunkt des Zeitdatenframes als Zeitpunkt ermittelt, zu dem die PRN Sequenz im empfangenen Zeitdatenframe erkannt wird, und zwar mit Subchip-Genauigkeit, wobei der Zeitdatenframe zum Abgleich der lokalen Zeitreferenzen der beiden Sende-/Empfangs-Einheiten ausgelesen und/oder ausgewertet wird.

Fig. 3

EP 4 618 446 A1

**Beschreibung**

Die Erfindung betrifft ein Verfahren zur für den Zeittransfer und das Ranging vorgesehenen bidirektionalen Übertragung von optischen Trägersignalen von einer ersten Sende-/Empfangs-Einheit zu einer zweiten Sende-/EmpfangsEinheit, die jeweils eine lokale Zeitreferenzeinheit aufweisen, welche nicht synchron sind, über einen optischen Übertragungskanal, wobei auf das optische Trägersignal Daten eines Datenstroms repräsentierende Signale moduliert sind.

Zur Synchronisation der lokalen Zeitbasen bzw. der lokalen Zeitreferenzeinheiten zweier Sende-/Empfangs-Einheiten, wie beispielsweise zweier Satelliten, erfolgt mit Hilfe sogenannter Zeittransfers. Insbesondere die Kommunikation zwischen Satelliten aufgrund der heutzutage geforderten Datenraten erfolgt typischerweise über einen optischen Kommunikationskanal.

Der Zeittransfer über einen optischen Freistrahllink geschieht nach dem Stand der Technik gemäß einer der nachfolgend genannten Arten:

1. Laserpulse

Übertragung von Laser-Pulsen, die dann mit einer Referenz eindeutig zugeordnet werden können. Die Genauigkeit wird auf 50-100 ps angegeben. Die erforderlichen Zeitstempel werden mittels eines Radio-Frequenz (RF) Link übertragen. Dieses System kann als ein einzelner Kanal in einem DWDM (Dense Wavelength Division Multiplexing) System betrieben werden.

Die Einsatzmöglichkeit und Applikation dieser Technik kann hinsichtlich folgender Aspekte eingeschränkt sein:

a) Die erreichte Genauigkeit von 50-100 ps ist nicht ausreichend, damit cm oder mm Level für zukünftige GNSS Anwendungen erreicht werden können.

b) Ein zusätzlicher insbesondere RF-Link oder (zweiter) optischer Link wird benötigt, damit die Zeitstempel übertragen werden können.

c) Kann in einem speziellen Kanal verwendet werden, jedoch wird spezifische Hardware benötigt.

2. Frequenzkammpulse

Übertragung von Ausgangspulsen eines Frequenzkamms, die mit separaten Zeitstempeln versehen werden. Ein paralleler (optischer) Kanal ermöglicht, dass die Pulse mit einem Zeitstempel übertragen werden. Die Genauigkeit wird auf 10-100 Femtosekunden geschätzt.

Die Einsatzmöglichkeit und Applikation dieser Technik kann hinsichtlich folgender Aspekte eingeschränkt sein:

a) Es wird auf beiden Seiten ein Frequenzkamm benötigt, welcher eine sehr komplexe und teure Komponente darstellt. Größe, Gewicht und die benötigte Leistung sind für den Einsatzort (Galileo Satelliten, LEO-PNT Satelliten, Kommunikationssatelliten in Konstellationen) zu hoch. Weiterhin ist derzeit kein für den Weltraumeinsatz qualifizierter Frequenzkamm erhältlich (Qualifizierung wird derzeit im Projekt COMPASSO durchgeführt).

b) Der zusätzliche Datenkanal erfordert weitere Komponenten.

c) Nicht kompatibel mit Dense wave length divison multiplexing (DWDM) Kanälen, da die Frequenzkämme sehr breitbandig sind.

3. Hochratige PRN Sequenzen mit optischer Korrelation

Übertragung von hochratigen Pseudo-Random Noise (PRN) Sequenzen, die auf der Empfangsseite mit einer Referenzsequenz in der optischen Domain korreliert werden. Die Referenzsequenz wird mithilfe einer Regelschleife auf das Eingangssignal gelockt. Auf den hochratigen PRN Code kann ein langsameres Datensignal auf-kodiert werden. Dieses wird zur Übertragung der notwendigen Zeitstempel benutzt. Dieses System kann als ein einzelner Kanal in einem DWDM System betrieben werden.

Die Einsatzmöglichkeit und Applikation dieser Technik kann hinsichtlich folgender Aspekte eingeschränkt sein:

a) Kann in einem speziellen Kanal verwendet werden, jedoch wird spezifische Hardware benötigt.

b) Es wird eine analoge Regelschleife benötigt, welche den Zeittransfer realisiert. Diese besteht aus der Generation einer Referenzsequenz mit digitalem Phasen-Diskriminator, digitalem Schleifenfilter und einem gesteuerten Verzögerungsglied für sub-chip Verschiebungen. Weiterhin ist es möglich, dass sich bei einem kurzeitigen Signalverlust die Regelschleife öffnet und die Schleife aktiv geschlossen werden muss.

c) Kohärente optische Übertragung ist für das System notwendig.

4. Zeitübertragung mit Synchronisationsbits

Mithilfe von Taktrückgewinnung wird der Zeitpunkt des Empfangs der Synchronisationsbits bestimmt. Die Präzision ist durch die Sampling rate beschränkt.

Die Einsatzmöglichkeit und Applikation dieser Technik kann hinsichtlich des folgenden Aspekts eingeschränkt sein:

a) Die erreichte Genauigkeit von 3 ns ist nicht ausreichend, damit cm oder mm Level für zukünftige GNSS Anwendungen erreicht werden können.

Datenübertragungsverfahren unter Verwendung optischer Freistrahllinks für die Überdatenübertragung mit und ohne Zeittransfer sind beispielsweise bekannt aus DE 10 2019 120 700 A1, DE 10 2020 115 460 B3, WO 2019/011919 A1 und EP 3 751 308 B1.

Aufgabe der Erfindung ist es, ein Verfahren anzugeben, mit dem sich die bidirektionale Übertragung von optischen Trägersignalen von einer ersten Sende-/Empfangs-Einheit zu einer zweiten Sende-/Empfangs-Einheit mit zu übertragenden Nutzdaten sowie der Daten für den Zeittransfer verbessern lässt.

Zur Lösung dieser Aufgabe wird mit der Erfindung ein Verfahren zur bidirektionalen Übertragung von optischen Trägersignalen von einer ersten Sende-/Empfangs-Einheit zu einer zweiten Sende-/Empfangs-Einheit vorgeschlagen, die jeweils eine lokale Zeitreferenzeinheit aufweisen, welche nicht synchron sind, über einen optischen Übertragungskanal, wobei auf das optische Trägersignal Daten eines Datenstroms repräsentierende Signale moduliert sind und wobei bei dem Verfahren

- der Datenstrom Nutzdatenframes und Zeitdatenframes aufweist, wobei auf mehrere sequentielle Nutzdatenframes ein Zeitdatenframe folgt, auf den wiederum mehrere sequentielle Nutzdatenframes folgen,
- jeder Zeitdatenframe einen Header mit einer jeweils empfängerseitig bekannten, mehrere Chips umfassenden PRN Sequenz und mit einem Zeitstempel aufweist, der den jeweiligen senderseitigen Absendezeitpunkt des Zeitdatenframes und den Zeitunterschied zwischen dem empfängerseitigen Absendezeitpunkt und dem senderseitigen Empfangszeitpunkt des letzten zuvor senderseitig empfangenen Zeitdatenframe aufweist,
- die PRN Sequenz empfängerseitig als digitale Binär-PRN Sequenz vorliegt,
- empfängerseitig der Datenstrom in einen Bitstrom mit Binärdaten gewandelt wird,
- empfängerseitig der Bitstrom mit der digitalen Binär-PRN Sequenz korreliert wird,
- empfängerseitig die PRN Sequenz des Headers des jeweils nächsten Zeitdatenframes innerhalb des empfangenen Datenstroms erkannt wird,
- empfängerseitig der Empfangszeitpunkt des Zeitdatenframes als Zeitpunkt ermittelt wird, zu dem die PRN Sequenz im empfangenen Zeitdatenframe erkannt wird, und zwar mit Subchip-Genauigkeit, und
- empfängerseitig der Zeitdatenframe zum Abgleich der lokalen Zeitreferenzen der beiden Sende-/Empfangs-Einheiten ausgelesen und/oder ausgewertet wird.

Bei dem erfindungsgemäßen Verfahren repräsentieren die modulierten optischen Trägersignale Daten eines Datenstroms, der erfindungsgemäß Nutzdatenframes und Zeitdatenframes (Zeittransfer-Frames) aufweist, die zwischen Nutzdatenframes oder Gruppen von Nutzdatenframes angeordnet sind, so dass auf ein oder mehrere sequentielle Nutzdatenframes ein Zeitdatenframe folgt, an den sich wiederum ein oder mehrere Nutzdatenframes anschließen. Erfindungsgemäß hat jeder Zeitdatenframe einen Header mit einer empfängerseitig bekannten, mehrere Chips umfassenden PRN Sequenz und mit einem Zeitstempel. Der Zeitstempel repräsentiert den jeweiligen senderseitigen Absendezeitpunkt des Zeitdatenframes und den Zeitunterschied zwischen dem empfängerseitigen Absendezeitpunkt und dem senderseitigen Empfangszeitpunkt des letzten zuvor senderseitig empfangenen Zeitdatenframe. Für den Zeittransfer und die Synchronisation der lokalen Zeitreferenzeinheiten der miteinander bidirektional kommunizierenden Sende-/Empfangs-Einheiten, insbesondere Satelliten, ist eine mehrfache bidirektionale Kommunikation erforderlich. Berücksichtigt dabei werden neben den asynchronen lokalen Zeitreferenzeinheiten auch sich ändernde Abstände der miteinander kommunizierenden Satelliten bzw. allgemein Sende-/Empfangs-Einheiten. Beispiele für die verschiedenen Zeittransfer-Verfahren sind beispielhaft in DE 10 2020 115 460 B3 genannt.

In jeder Sende-/Empfangs-Einheit ist die PRN Sequenz, die die jeweilige Einheit erwartet, als digitale Binär-PRN Sequenz abgelegt. Empfängerseitig wird der Datenstrom in einen Binärdaten-Bitstrom gewandelt, wobei dieser Bitstrom mit der digitalen Binär-PRN Sequenz korreliert wird, um innerhalb des empfangenen Datenstroms den Header des jeweils nächsten empfangenen Zeitdatenframes erkennen zu können. Empfängerseitig wird dann der Empfangszeitpunkt des Zeitdatenframes als derjenige Zeitpunkt mit Subchip-Genauigkeit als derjenige Zeitpunkt ermittelt, zu dem die PRN Sequenz im empfangenen Zeitdatenframe erkannt worden ist. Der Zeitdatenframe wird dann zum Abgleich der lokalen Zeitreferenzen beider Sende-/Empfangs-Einheiten ausgelesen oder ausgewertet.

In zweckmäßiger Ausgestaltung der Erfindung kann vorgesehen sein, dass der Zeitdatenframe ferner Statusdaten über die jeweils senderseitige Sende-/Empfangs-Einheit, von der das optische Trägersignal gesendet wird, und/oder Kalibrationsdaten zur Kalibration der jeweiligen empfängerseitigen Sende-/Empfangs-Einheit enthält, an die das optische Trägersignal gesendet wird.

Schließlich kann mit Vorteil ferner vorgesehen sein, dass die Übertragungsgeschwindigkeit des optischen Trägersignals in dem optischem Übertragungskanal bekannt ist und dass anhand der Übertragungsgeschwindigkeit und des jeweiligen Empfangszeitpunkts eines Zeitdatenframes und des senderseitigen Absendezeitpunkts des besagten Zeitdatenframes sowie der Information des besagten Zeitdatenframes über den Zeitunterschied der Abstand der beiden Sende-/Empfangs-Einheiten voneinander ermittelt wird.

Die Vorteile und wesentlichen Eigenschaften des erfindungsgemäßen Verfahrens lassen sich kurz wie folgt zusammenfassen:

1. Die Korrelation der Sequenz wird in der digitalen Domain durchgeführt. Die Referenzsequenz wird nur in der digitalen Domain erzeugt und mit dem empfangenen Signal korreliert. Es werden hochratige ADC benötigt, damit die Sequenz gesampelt werden kann. Diese ADCs werden jedoch auch für hochratige Datenübertragungen benötigt.

2. Die Korrelation und Integration erlaubt eine Auflösung im sub-chip Bereich.

3. Das System benötigt keine Regelschleife am Empfänger. Damit wird die benötigte Hardware reduziert und Verzögerungsglied, RF Verstärker und optischer Modulator werden nicht benötigt.

4. Das System ist unabhängig vom Modulationsverfahren. Sowohl On-Off-Keying, Phasen und/oder Amplitudenmodulation, Quadraturamplitudenmodulation und die Verwendung weiterer Multiplexverfahren (z.B. Dense Wavelength Division Multiplexing, duale Polarisation, Multi-Moden, etc.) erlauben den Zeittransfer.

5. Die erforderliche Hardware ist der eines Kommunikationskanal identisch. Lediglich die Firmware des Controllers muss angepasst werden. Das System lässt sich sehr einfach in ein Multikanal Kommunikationssystem einbinden.

6. Der Zeittransfer kann in einen Kommunikationskanal integriert werden mithilfe von Zeitmultiplexverfahren (TDMA).

7. PRN Sequenz und Header des Datenkanals können in einem geteilten Daten- und Zeittransferkanal zusammengeführt werden und somit Overhead einsparen. Weiterhin kann empfängerseitig Prozessierungsleistung eingespart werden, da die Header-Erkennung für Zeit- und Datentransfer genutzt werden kann.

8. Das System ist sehr robust gegen hohen Doppler-Effekt und Doppler-Raten.

9. Das System benötigt keine Akquisitionszeit (im Unterschied zu z.B. bei optischer Korrelation, bei der die PRN-Sequenz gescannt werden muss).

Die Erfindung wird nachfolgend anhand eines Ausführungsbeispiels und unter Bezugnahme auf die Zeichnung näher erläutert. Im Einzelnen zeigen dabei:

| Figur 1 | ein Beispiel für eine Satelliten-Konstellation, bei der die Erfindung eingesetzt werden kann, |
| Figur 2 | ein Blockschaltbild der Hauptkomponenten eines Systems zur Umsetzung des erfindungsgemäßen Verfahrens, |
| Figur 3 | eine schematische Darstellung des Übertragungskanals mit dem Datenstrom aus Nutzdatenframes und Zeitdatenframes sowie mit dem Aufbau eines Zeitdatenframes, |
| Figur 4 | ein Diagramm einer empfangenen Bit-Sequenz, wobei zum Abtastpunkt 0 die gewünschte PRN Sequenz empfangen wird, |
| Figuren 5a und 5b | zeigen den Graph der Korrelationsfunktion zwischen dem empfangenen Signal und der erkannten PRN Sequenz mit einem Peak zum Sampling-Punkt 0, wobei Figur 5b eine Vergrößerung des Graphs der Figur 5a um den Abtastpunkt 0 herum zeigt, und |
| Figur 6 | ein Diagramm der Subchip-Bestimmung mit Zeitfehlerabschätzung bei Auswertung des Graphs gemäß Figuren 5a und 5b anhand der Formel zur Bestimmung einer Parabel aus drei Punkten, um den Mittelpunkt zu bestimmen. |

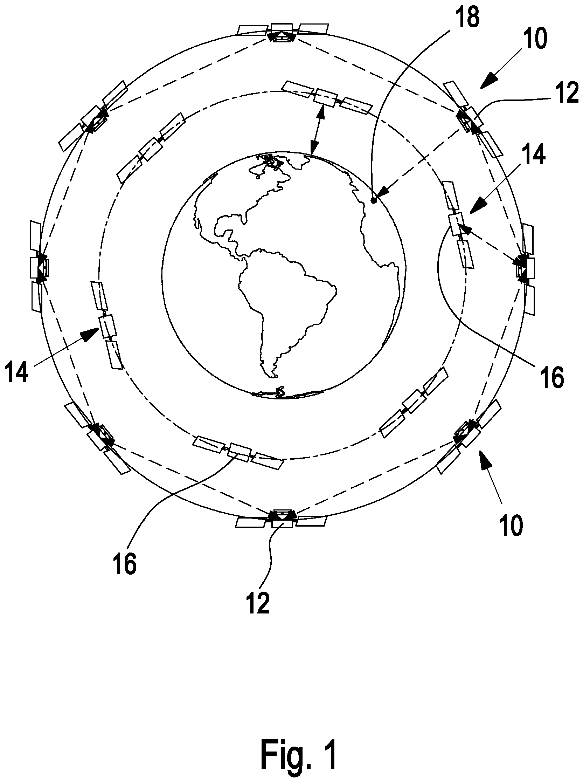

In Figur 1 ist eine Satelliten-Konstellation gezeigt, bei der sich mehrere Satelliten 10, die einzelne Sende-/Empfangs-Einheiten 12 repräsentieren, auf einem MEO-Orbit bewegen. Jeweils benachbarte MEO-Satelliten 10 stehen durch optische Datenkommunikation in Verbindung miteinander. Auf einem erdnäheren LEO-Orbit befinden sich weitere (LEO-) Satelliten 14 als Sende-/Empfangs-Einheiten 16, die beispielsweise untereinander und mit dem MEO-Satelliten 10 ebenfalls durch optische Datenkommunikation in Verbindung stehen und darüber hinaus mittels Down-Links und Up-Links mit Bodenstationen 18 auf der Erde kommunizieren.

Für beispielsweise die hochgenaue Anwendung in der Geodesie ist neben der Zeitsynchronisierung der lokalen Zeitreferenzen der Satelliten auch die Kenntnis der exakten Entfernungen beispielsweise benachbarter MEO-Satelliten 10 oder der Abstand eines MEO-Satelliten 10 zu einem LEO-Satelliten 12 sowie die Verfolgung von deren Veränderungen von großer Bedeutung. Hierzu kann man beispielsweise das Verfahren des "Optical ranging" verwenden. Ein wesentlicher Baustein dieses Verfahrens ist wie gesagt auch die Zeitsynchronisation.

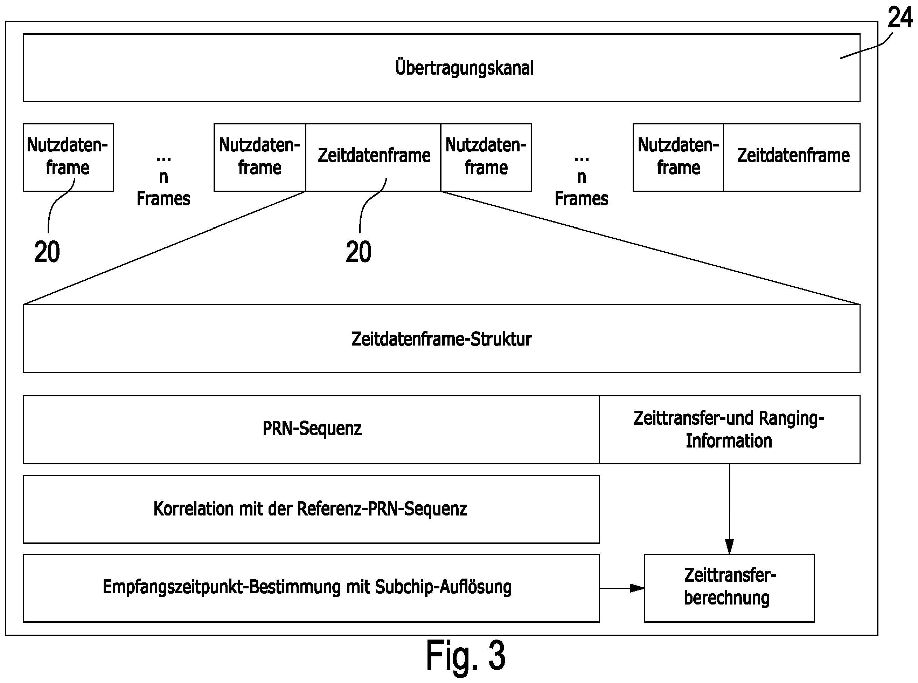

Hierzu dient das erfindungsgemäße Verfahren, bei dem neben Nutzdatenframes 20 auch Zeitdatenframes 22 (siehe Figur 3) in den übertragenen Datenstrom integriert sind.

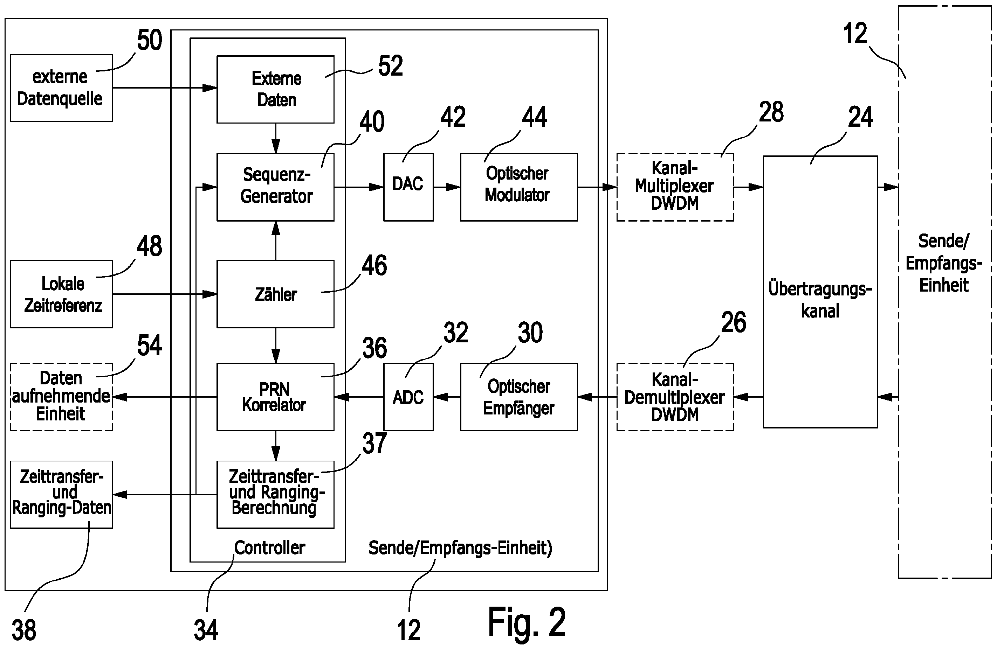

Ein denkbarer Systemaufbau zur Realisierung des erfindungsgemäßen Verfahrens ist in Figur 2 gezeigt. Die Funktionsblöcke in durchgehenden Linien sind für den Zeittransfer (und ggf. das Ranging) relevant. Die gestrichelten Blöcke zeigen die Möglichkeit für einen zusätzlichen Datentransfer und für Multiplexing.

In Figur 2 gezeigt sind zwei Sende-/Empfangs-Einheiten 12, bei denen es sich in diesem Ausführungsbeispiel um zwei MEO-Satelliten handelt, wie in Figur 1 gezeigt. Die wesentlichen Funktionsblöcke jeder Sende-/Empfangs-Einheit sind in Figur 2 für die dort links gezeigte Sende-/Empfangs-Einheit 12 gezeigt. Die beiden Sende-/Empfangs-Einheiten 12 kommunizieren über einen optischen Übertragungskanal 24. Wird die Datenübertragung mittels Multiplexing betrieben, so sind ein Kanal-Demultiplexer 26 und ein Kanal-Multiplexer 28 vorgesehen.

Das ggf. über den Kanal-Demultiplexer 26 empfangene Signal wird senderseitig mittels eines optischen Empfängers 30 empfangen und mithilfe eines ADC 32 (eine Abtastrate sollte das Nyqvist-Kriterium erfüllen, damit die Nachbarwerte der Korrelation sinnvoll verwendet werden können) in die digitale Domaine als binärer Bitstrom gewandelt. Anschließend findet im Controller 34 die PRN-Korrelation mittels eines entsprechenden Korrelators 36 statt. Mit dem Empfangszeitpunkt als Ergebnis der Korrelation ergibt sich mit dem Zeitdatenframe 22 der Zeitstempel (Absendezeitpunkt des empfangenen Datenstroms seitens der als Sender arbeitenden Sende-/Empfangs-Einheit 12) und der im Rahmen des Zeitabgleichs und der Zeitsynchronisation zuletzt ermittelte Zeitunterschied zwischen Absendezeitpunkt und Empfangszeitpunkt. Die hierzu im Block 37 ermittelten Daten stehen dann für den Zeittransfer (da das Ergebnis der Korrelation der Empfangszeitpunkt ist, mit dem anhand des Zeitstempels der Zeitunterschied berechnet werden kann) und das Ranging zur Verfügung (siehe Bezugszeichen 38 in Figur 2).

Von dem Block 37 gesteuert erfolgt die Sequenzerzeugung für das Zurücksenden der für den Zeittransfer erforderlichen Daten an die in Figur 2 rechts gezeigte Sende-/Empfangs-Einheit 12. Die Sequenzerzeugung erfolgt bei 40, findet im in der digitalen Domaine statt und wird mittels eines DAC 42 und mittels eines optischen Modulators 44 in ein optisches Signal gewandelt, das dann über den Kanal-Multiplexer 28 (sofern ein Multiplexing vorgesehen ist) mittels des Übertragungskanals 24 versendet wird.

Die Taktrate, mit der der Controller 34 arbeitet, wird bestimmt durch einen Zähler 46, der seinerseits von der lokalen Zeitreferenz 48 der Sende-/Empfangs-Einheit 12 gesteuert wird. Die lokale Zeitreferenz 48 mit typischerweise einem 10 MHz-Signal eines Oven Controlled Crystal Oscillator (OCXO) oder eines Masers oder ähnlichem referenziert also die Schaltfrequenz des Controllers 34, der seinerseits als interne Zeitreferenz den Zähler 46 aufweist.

Wie anhand von Figur 2 für den Controller 34 gezeigt, können nun neben den Daten für den Zeittransfer auch noch Nutzdaten eingebunden werden. Derartige Nutzdaten kommen beispielsweise von externen Datenquellen 50, die im Controller 34 verarbeitet werden (siehe Block 52), um dann zusammen mit den Daten aus der Zeitunterschieds- und Ranging-Berechnung in Block 37 den Sequenz-Generator 40 zugeführt zu werden.

Die empfangenen Daten weisen typischerweise ebenfalls Nutzdaten auf, die nach der PRN-Korrelation durch den PRN-Korrelator 36 ausgegeben werden, und zwar an beispielsweise eine diese Daten aufnehmende Einheit 54 (wie z.B. eine Datenverarbeitungseinheit).

Eines der Wesensmerkmale der Erfindung ist es, dass der Zeitdaten- und der Nutzdaten-Transfer sozusagen als "Mischung" auf ein und demselben Kanal übertragen werden. Dies ist schematisch in Figur 3 gezeigt.

Über den Übertragungskanal 24 werden Nutzdatenframes 20 und zwischen diesen jeweils immer wieder einzelne Zeitdatenframes 22 übertragen. Dabei folgt ein Zeitdatenframe auf eine Anzahl von n (n = natürliche Zahl) Nutzdatenframes 20.

Jeder Zeitdatenframe 22 weist die in Figur 3 gezeigte Zeitdatenframe-Struktur auf. Diese Zeitdatenframe-Struktur umfasst die PRN Sequenz sowie die Zeittransfer- und Ranging-Informationen. Nach erfolgter Korrelation mit der Referenz-PRN Sequenz wird der Empfangszeitpunkt mit Subchip-Genauigkeit geschätzt, woraus sich die Zeittransferberechnung ergibt, in die u.a. auch die Zeittransfer- und Ranging-Information der Zeitdatenframe-Struktur einfließt.

Die Länge der Frames wird bestimmt durch Optimierung der Performance des Zeittransfers, dem Daten-Overhead, dem Doppler-Effekt und der Übertragungsrate. Ein Zeitdatenframe (Zeittransfer-Frame) besteht aus einer PRN Sequenz und den angehängten Zeitstempeln und weiteren ggf. erforderlichen Status-Daten über beispielsweise die Sende-/Empfangs-Einheit, von der der Datenstrom empfangen wird. Im Controller 34 (siehe Figur 2) wird ein Frame durch Korrelation mit der Referenz-PRN Sequenz erkannt und der Empfangszeitpunkt wird gemessen/berechnet. Kombiniert mit den gesendeten Zeittransfer-Informationen kann der Zeittransfer und die Entfernung (Ranging) zwischen den beiden Sende-/Empfangs-Einheiten in bekannter Weise berechnet werden.

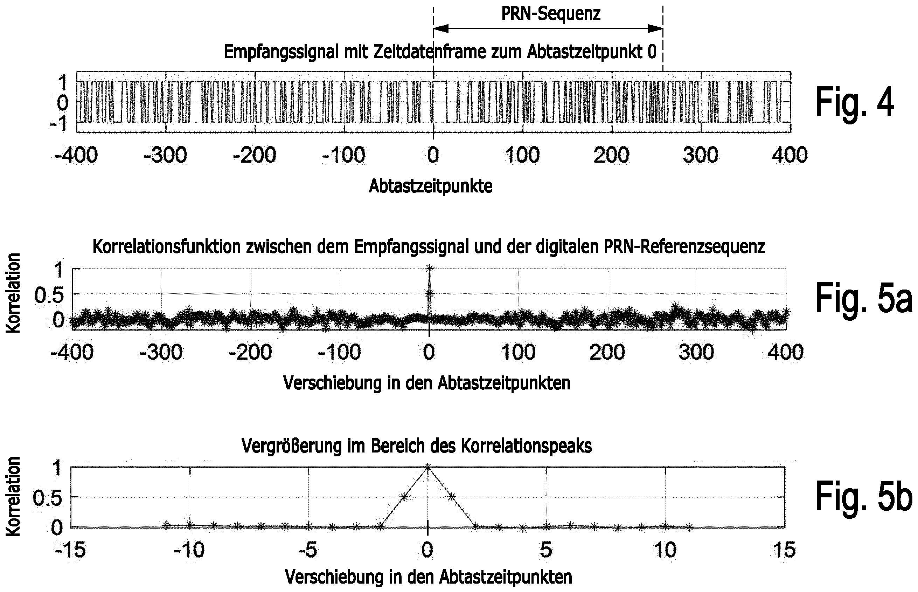

Anhand der Diagramme der Figuren 4, 5a und 5b wird nun die Untersuchung einer empfangenen Bit-Sequenz gezeigt, die, wie in Figur 4 gekennzeichnet, die Referenz-PRN Sequenz beinhaltet. Zum Abtastzeitpunkt 0 wird diese PRN Sequenz empfangen. Sie stimmt mit der empfangenen Bit-Folge überein. Der Graph in Figur 5a zeigt die Korrelationsfunktion zwischen dem Signal und der Empfangssequenz mit einem Peak zum Abtastzeitpunkt 0. Die Figur 5b zeigt den Bereich um den Peak herum in vergrößertem Maßstab. Mithilfe des Maximums ($P_{max}$) und den beiden Nachbarn ($P_{early}$ und $P_{late}$) lässt sich der optimale Sampling-Punkt im Dezimalbereich berechnen. Dieses Ergebnis, kombiniert mit dem internen Zähler 46, erlaubt eine präzise ZeittransferBerechnung im Subchip-Bereich. Das Ergebnis der Korrelation kann u.a. auch zur Taktrückgewinnung der Nutzdatenframes genutzt werden. Weiterhin ist es möglich, alternative Taktraten-Rückgewinnungsalgorithmen für die Frame-Erkennung zu verwenden, wenn der Start der PRN Sequenz in ausreichender Präzision bestimmt werden kann.

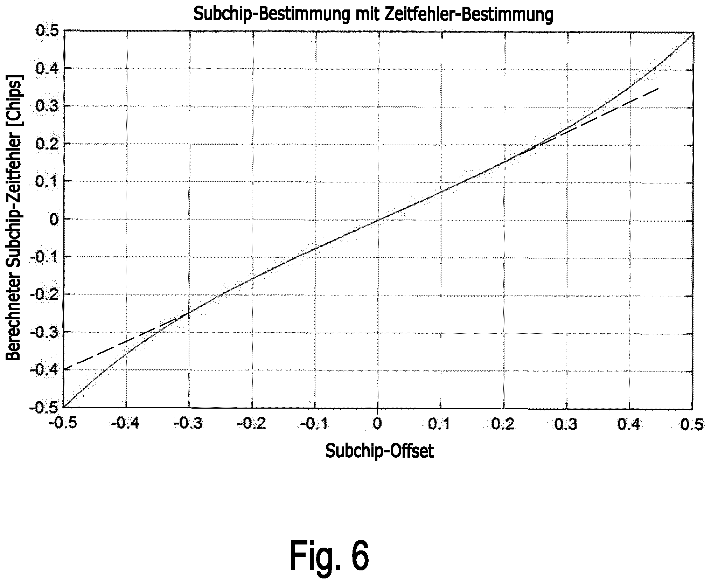

In Figur 6 ist ein Diagramm mit einem Graph zur Darstellung der Möglichkeit der Subchip-Bestimmung des Empfangszeitpunkts der PRN Sequenz im Zeitdatenframe 22 gezeigt. Als Beispiel dient die Formel zur Bestimmung einer Parabel aus drei Punkten, um den Mittelpunkt ($e_{Subchip}$) zu bestimmen. Diese Formel lautet:

$$e_{sub\,chip} = \frac{P_{early} - P_{late}}{P_{max} - P_{early} - P_{late}}$$

Die Nichtlinearität der Funktion gemäß Figur 6 ergibt sich durch den Unterschied zwischen Parabel und Symbolform und kann mit einer Linearisierung (gestrichelt angedeutet) optimiert werden, um den Fehler zu reduzieren.

## BEZUGSZEICHENLISTE

10 MEO-Satellit
12 Sende-/Empfangs-Einheit
14 LEO-Satellit
16 Sende-/Empfangs-Einheiten
18 Bodenstation
20 Nutzdatenframe
22 Zeitdatenframe
24 Übertragungskanal
26 Kanal-Demultiplexer
28 Kanal-Multiplexer
30 optischer Empfänger
32 ADC
34 Controller
36 PRN-Korrelator
37 Zeittransfer- und Ranging-Berechnung
38 Zeittransfer- und Ranging-Daten
40 Sequenz-Generator
42 DAC
44 optischer Modulator

46 Zähler
48 lokale Zeitreferenz
50 externe Datenquelle
52 externe Daten
54 Daten aufnehmende Einheit

## Patentansprüche

1. Verfahren zur bidirektionalen Übertragung von optischen Trägersignalen von einer ersten Sende-/Empfangs-Einheit zu einer zweiten Sende-/Empfangs-Einheit, die jeweils eine lokale Zeitreferenzeinheit aufweisen, welche nicht synchron sind, über einen optischen Übertragungskanal, wobei auf das optische Trägersignal Daten eines Datenstroms repräsentierende Signale moduliert sind und wobei bei dem Verfahren

    - der Datenstrom Nutzdatenframes und Zeitdatenframes aufweist, wobei auf mehrere sequentielle Nutzdatenframes ein Zeitdatenframe folgt, auf den wiederum mehrere sequentielle Nutzdatenframes folgen,
    - jeder Zeitdatenframe einen Header mit einer jeweils empfängerseitig bekannten, mehrere Chips umfassenden PRN Sequenz und mit einem Zeitstempel aufweist, der den jeweiligen senderseitigen Absendezeitpunkt des Zeitdatenframes und den Zeitunterschied zwischen dem empfängerseitigen Absendezeitpunkt und dem senderseitigen Empfangszeitpunkt des letzten zuvor senderseitig empfangenen Zeitdatenframe aufweist,
    - die PRN Sequenz empfängerseitig als digitale Binär-PRN Sequenz vorliegt,
    - empfängerseitig der Datenstrom in einen Bitstrom mit Binärdaten gewandelt wird,
    - empfängerseitig der Bitstrom mit der digitalen Binär-PRN Sequenz korreliert wird,
    - empfängerseitig die PRN Sequenz des Headers des jeweils nächsten Zeitdatenframes innerhalb des empfangenen Datenstroms erkannt wird,
    - empfängerseitig der Empfangszeitpunkt des Zeitdatenframes als Zeitpunkt ermittelt wird, zu dem die PRN Sequenz im empfangenen Zeitdatenframe erkannt wird, und zwar mit Subchip-Genauigkeit, und
    - empfängerseitig der Zeitdatenframe zum Abgleich der lokalen Zeitreferenzen der beiden Sende-/Empfangs-Einheiten ausgelesen und/oder ausgewertet wird.

2. Verfahren nach Anspruch 1, **dadurch gekennzeichnet, dass** der Zeitdatenframe ferner Statusdaten über die jeweils senderseitige Sende-/Empfangs-Einheit, von der das optische Trägersignal gesendet wird, und/oder Kalibrationsdaten zur Kalibration der jeweiligen empfängerseitigen Sende-/Empfangs-Einheit enthält, an die das optische Trägersignal gesendet wird.

3. Verfahren nach Anspruch 1 oder 2, **dadurch gekennzeichnet, dass** die Übertragungsgeschwindigkeit des optischen Trägersignals in dem optischem Übertragungskanal bekannt ist und dass anhand der Übertragungsgeschwindigkeit und des jeweiligen Empfangszeitpunkts eines Zeitdatenframes und des senderseitigen Absendezeitpunkts des besagten Zeitdatenframes sowie der Information des besagten Zeitdatenframes über den Zeitunterschied der Abstand der beiden Sende-/Empfangs-Einheiten voneinander ermittelt wird.

Fig. 1

Fig. 2

**Fig. 3**

EP 4 618 446 A1

Fig. 4

Fig. 5a

Fig. 5b

Fig. 6

EP 4 618 446 A1

**Europäisches Patentamt**
**European Patent Office**
**Office européen des brevets**

# EUROPÄISCHER RECHERCHENBERICHT

Nummer der Anmeldung

EP 24 22 1144

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2020 115460 B3 (DEUTSCH ZENTR LUFT & RAUMFAHRT [DE]) 4. November 2021 (2021-11-04) * das ganze Dokument * ----- | 1-3 | INV. H04B10/118 H04J3/06 |
| A | JUAN JOSE ESTEBAN DELGADO ET AL: "Free-space laser ranging and data communication", POSITIONING, NAVIGATION AND COMMUNICATION, 2009. WPNC 2009. 6TH WORKSHOP ON, IEEE, PISCATAWAY, NJ, USA, 19. März 2009 (2009-03-19), Seiten 275-281, XP031452406, ISBN: 978-1-4244-3292-9 * das ganze Dokument * ----- | 1-3 | |
| A | WOLF MIKE ET AL: "Synchronization and channel estimation for optical block-transmission systems with IM/DD", 2016 18TH INTERNATIONAL CONFERENCE ON TRANSPARENT OPTICAL NETWORKS (ICTON), IEEE, 10. Juli 2016 (2016-07-10), Seiten 1-5, XP032949845, DOI: 10.1109/ICTON.2016.7550318 [gefunden am 2016-08-23] * das ganze Dokument * ----- | 1-3 | RECHERCHIERTE SACHGEBIETE (IPC) H04B H04L H04J |

Der vorliegende Recherchenbericht wurde für alle Patentansprüche erstellt

| Recherchenort | Abschlußdatum der Recherche | Prüfer |
|---|---|---|
| München | 7. Mai 2025 | Gäde, Sebastian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 22 1144

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-05-2025

| Im Recherchenbericht angeführtes Patentdokument | Datum der Veröffentlichung | Mitglied(er) der Patentfamilie | Datum der Veröffentlichung |
|---|---|---|---|
| DE 102020115460 B3 | 04-11-2021 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019120700 A1
- DE 102020115460 B3
- WO 2019011919 A1
- EP 3751308 B1